# EUROPEAN PATENT APPLICATION

(11) **EP 2 256 091 A1**
(43) Date of publication of application: **01.12.2010**
(21) Application number: 09006982.4
(22) Date of filing: 26.05.2009
(51) Int. Cl.: C02F 3/04, C02F 11/16

(54) **A stratified bioreactor**

(71) Applicant: National University of Ireland, Galway, Galway (IE)
(72) Inventor: Rodgers, Michael, Galway (IE)
(74) Representative: O'Neill, Brian

(57) **Abstract**

The present invention relates to a stratified bioreactor, and in particular to a bioreactor which is capable of both biologically processing wastewater, slurries and other wastes using organic material such as woodchips or the like, and drying and/or composting the organic material for further use as a fuel, compost or fertilizer, the bioreactor comprising first and second sections, the first section being used to filter the wastewater using a layer of biomaterial, and the second section being used primarily to store and dispense biomaterial into the first section in order to supplement the layer of biomaterial in the first section.

## Description

### Field of the invention

This invention relates to a stratified bioreactor, and in particular to a bioreactor which is capable of both biologically processing wastewater, slurries and other wastes using organic material such as woodchips or the like, and drying and/or composting the organic material for further use as a fuel, compost or fertiliser.

### Background of the invention

Many wastewaters, including municipal and agricultural wastewaters, have carbon (C), nitrogen (N), and phosphorous (P), and normally in ratios of about 100:20:8. Heterotrophic micro organisms require ratios of CNP of about 100:5:1. As a result, when heterotrophic growth takes places, which is vigorous and robust, the entire carbon (C) is used up but significant N and P remain in the wastewater, which could cause pollution in receiving water. The removal ofN and P commonly requires a series of processes including aerobic nitrification, anoxic denitrification, anaerobic phosphorous release and aerobic phosphorous uptake. These processes can require complicated process control, sensitive nitrifying bacteria and phosphorous accumulating organisms. Further, the very damaging greenhouse gas, nitrous oxide gas, can be released to the atmosphere in the denitrification process.

It is therefore an object of the present invention to overcome the above mentioned problems.

### Summary of the invention

According to a first aspect of the present invention there is provided a bioreactor comprising a reactor vessel comprising first and second sections in communication with one another; an inlet arranged to dispense influent into the first section of the vessel; an outlet in the first section for removing filtrate; means for retaining biomaterial in the second section of the vessel; and means for drawing gas from the first section through, in use, the biomaterial retained in the second section.

Preferably, the means for retaining biomaterial in the second section is adapted to affect the staged release of the biomaterial into the first section to be used in the physical and biological filtration of the influent.

Preferably, the means for retaining biomaterial in the second section is adapted to retain the biomaterial in layers and to affect the sequential release of the layers into the first section.

Preferably, the gas drawing means comprises a sensor operable to monitor one or more parameters indicative of the pressure required to draw gas through the vessel.

Preferably, the retaining means in the second section is adapted to release biomaterial into the first section once an upper limit value of the sensor is reached.

Preferably, the gas drawing means comprises a fan having an intake in fluid communication with the second section of the reactor vessel.

Preferably, the upper section defines a headspace which is, in use, devoid of the biomaterial and with which headspace the gas drawing means is in fluid communication.

Preferably, the bioreactor comprises a diffuser in operative association with the inlet.

Preferably, the bioreactor comprises means for removing the biomaterial from the reactor vessel.

Preferably, the removing means comprises a net substantially lining the reactor vessel.

Preferably, the first and second sections are reversibly separable from one another.

Preferably, the reactor vessel is adapted to allow the retaining means to be refilled with biomaterial.

According to a second aspect of the present invention there is provided a method of biologically processing influent, the method comprising the steps of:
providing a bioreactor according to the first aspect of the invention allowing the influents to percolate through a layer of biomaterial in the first section of the reactor vessel to effect the physical filtration of the influent;
biologically processing the influent by means of a biofilm on the layer of biomaterial; and filtering gas from the first section through the biomaterial in the second section before exhausting the gas from the reactor vessel.

Preferably, the method comprises the step of dispensing at least a portion of the biomaterial from the second section onto the biomaterial in the first section in order to renew the filtration capacity of the first section.

Preferably, the method comprises, in the step of dispensing at least a portion of the biomaterial from the second section onto the biomaterial in the first section, dispensing the biomaterial once a parameter indicative of the pressure required to draw gas through the vessel reaches a predetermined limit.

Preferably, the method comprises, in the step of dispensing at least a portion of the biomaterial from the second section onto the biomaterial in the first section, dispensing the biomaterial in stages.

Preferably, the method comprises at least partially refilling the second section with biomaterial following the dispensing of biomaterial therefrom.

Preferably, the method comprises the step of drawing gas through the biomaterial in the first section in order to substantially dry and/or compost the biomaterial.

As used herein, the term "biomaterial" is intended to mean organic material, preferably organic material rich in carbon, for example woodchips, peat or other organic media, stover, straw, etc.

### Brief description of the drawing

The present invention will now be described with reference to the accompanying drawings, in which;
Figure 1 illustrates a schematic sectioned side view of a bioreactor according to an embodiment of the present invention;
Figure 2 illustrates the bioreactor of figure 1 with a first hatch opened to permit the transfer of biomaterial between upper and lower sections of the bioreactor;
Figure 3 illustrates the bioreactor of figures 1 and 2, with a first layer of biomaterial having been dispensed from the upper section to the lower section of the bioreactor; and
Figure 4 illustrates the bioreactor of figures 1 to 3 in which a second hatch has been opened and a second layer of biomaterial dispensed from the upper section to the lower section of the bioreactor.

### Detailed description of the drawings

Referring now to the accompanying drawings there is illustrated a bioreactor, generally indicated as 10, which is adapted to effect the physical and biological filtration of influents such as municipal, industrial and/or agricultural wastewaters, or sludge and biosolids produced in a waste water treatment plant or the like. The reactor 10 is also capable of physically and biologically filtering and/or remediating gases produced within the bioreactor 10 before being exhausted to the atmosphere or elsewhere. The bioreactor 10, as will be described in detail hereinafter, utilises biomaterial such as woodchips or the like as a filtration medium, which medium can also be dried and/or composted for further use once it's filtration duties within the reactor 10 are complete. The reactor 10 may also utilise one or more layers (not shown) of inorganic material, for example CaCO₃ for removing H₂S.

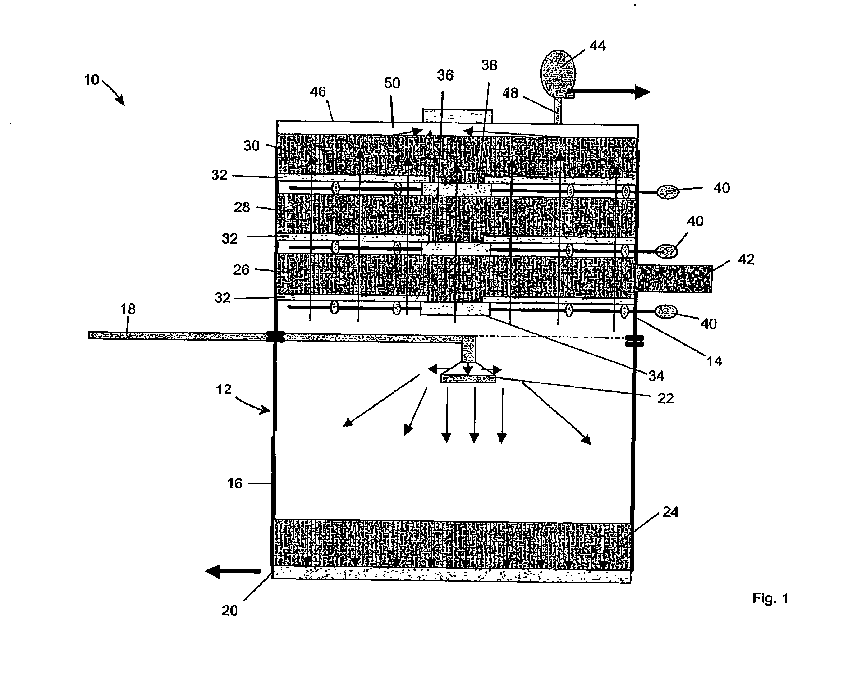

Referring now in particular to figure 1 the bioreactor 10 comprises a reactor vessel 12 which is preferably formed from two reversibly separable sections, namely an upper section 14 and a lower section 16 above which the upper section 14 is mounted. The interior of the upper and lower sections 14, 16 are in communication with one another. It will be appreciated from the following description of the invention that the vessel 12 could be formed as a single unit, although this would make access to the interior of the vessel 12, for example for servicing or the like, more difficult. It is also envisaged that the upper section 14 and lower section 16 may not be stacked one above the other, and could be located remotely from one another, for example side by side if required due to height or other restrictions, as described in detail below.

The reactor 10 further comprises an inlet 18 which in the embodiment illustrated is in the form of a simple pipe which enters the vessel 12 at the interface between the upper and lower sections 14,16. The inlet 18 allows influents such as wastewater to be introduced into the interior of the vessel 12. The reactor 10 further comprises an outlet 20 located at the base of the vessel 12, from which filtrate may be removed from the reactor 10. A diffuser 22 is mounted at the inner end of the inlet 18 in order to disperse the influent over a wide surface area of the lower section 16.

In use, located at the bottom of the lower section 16 is a base layer 24 of biomaterial, preferably in the form of woodchips, which may be located on a bed of gravel (not shown), a metal mesh, or any other suitable means of retaining the woodchips or other biomaterial to prevent the woodchips from clogging the outlet 20. As described hereinafter, the base layer 24 serves to effect the physical filtration of the solids fraction of the influent, while also serving as a growth medium on which a biofilm is present in order to effect the biological processing of the influent in order to further reduce the pollution potential of the influent. The filtrate exiting the reactor 10 may be treated further, depending on the quality requirements thereof.

Located above the base layer 24, and retained in the upper section 14 as will be described hereinafter, are first, second and third layers 26, 28, 30 of biomaterial, again preferably woodchips. These layers 26, 28, 30 serve a number of functions, namely to supplement the base layer 24 as required, while also performing filtration of gas generated during the biological filtration of the influent within the reactor 10, before exhausting the gas from the reactor 10. In the embodiment illustrated the first, second and third layers 26, 28, 30 are stacked one above the other, and cover substantially the entire cross section of the upper section 14 of the vessel 12. It will however be appreciated from the following description that this configuration could be altered while maintaining the functionality of the invention.

The reactor 10 thus comprises retaining means in the form of three dividers 32 which serve to both separate the first, second and third layers 26, 28, 30 and allow the passage of gas upwardly through the layers 26, 28, 30. This is achieved by providing each of the dividers 32 with an array of perforations or holes (not shown) therein which are dimensioned to prevent the passage of the woodchips therethrough but will permit the free passage of gas. The exact purpose of these holes will be described in detail hereinafter.

Each of the dividers 32 is provided with means to effect the release of the biomaterial in the respective layers 26, 28, 30 in order to allow same to drop down onto the base layer 24. Thus the lowermost divider 32 is provided with a first hatch 34 therein, the middle divider 32 is provided with a second hatch 36 while the upper most divider 32 is provided with a third hatch 38. Each of the hatches is connected to a handle 40 which extends, in the embodiment illustrated, laterally through the side wall of the vessel 12 to the exterior thereof, in order to be externally accessible. By drawing any one of the handles 40 away from the vessel 12 it is possible to open the respective hatch and therefore effect the gravity driven displacement of the respective layer 26, 28, 3 0 of woodchips downwardly onto the base layer 24, the reasons for which are set out hereinafter.

It will of course be appreciated that any other suitable means may be employed to enable the release of the biomaterial from the layers 26, 28, 30. For example the hatches 34, 36, 38 and corresponding handles 40 could be replaced with any other functional equivalent, and could for example be remotely controlled using suitable components. In addition, if the upper section 14 is not stacked above the lower section 16 it will be necessary to provide transfer means (not shown) to effect the transfer of biomaterial from the layers 26, 28, 30 from the upper section 14 to the lower section 16. The transfer means could for example take the form of an archimedes type screw lift (not shown) or the like.

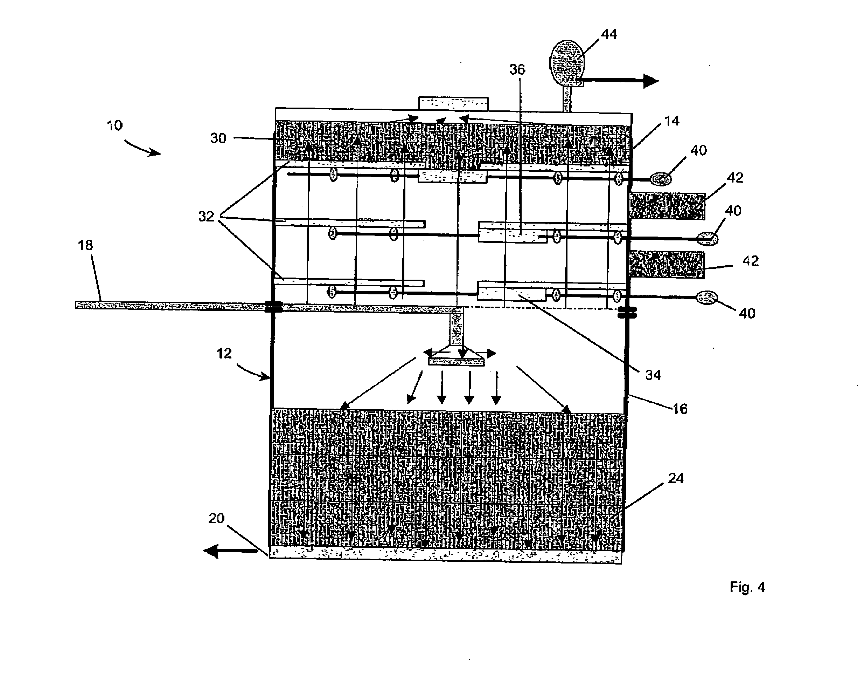

Formed in the side wall of the vessel 12, and in particular the upper section 14, are three doors 42, only one of which is shown in the open position and therefore visible in figures 1 to 3, while two are shown in the open position in figure 4. Each of the doors 42 is aligned with one of the layers 26, 28, 30 of wood chips, and thus when opened provide access to said layer. This allows the layer of woodchip to be fully emptied once the respective hatch 34, 36, 38 is opened, for example by inserting a suitable implement such as a rake or a brush through the door 42 in order to sweep any remaining woodchips out of the respective hatch. In addition the doors 42 allow each of the layers to be refilled with woodchips if necessary, and again for reasons described hereinafter.

The reactor 10 further comprises means for drawing gas from the first section through the layers 26, 28, 30 of woodchip, in the form of a fan 44 mounted to a lid 46 of the reactor 10. In particular an intake 48 of the fan 46 is in fluid communication with the interior of the vessel I2, and preferably a headspace 50 formed above the third layer 30, and which headspace 50 is devoid of woodchip. This ensures that an even suction is generated across the entire surface area of the third layer 30 when the fan is running, thus ensuring an even suction upwardly through the entire upper section 14 of gases from the lower section 16. The fan 44 may simply exhaust to atmosphere, or may capture the gases for further treatment or supply the gas to a suitable reservoir for further use, for example as a fuel.

Turning then to the operation of the reactor 10, the vessel 12 must first be suitably filled with woodchips. To this end it is preferable that the upper and lower sections 14, 16 are reversibly connected together and may therefore be separated in order to allow ease of filling of the vessel 12 with woodchips. Once the upper section 14 has been removed, a layer of gravel, for example 100mm deep, may be initially placed in the lower section 16 as a bed for the base layer 24 of woodchips. The base layer 24 of woodchip is then introduced into the lower section 16 as illustrated. In order to fill the upper section 14 each of the hatches 34, 36, 38 is moved to the closed position, and each of the doors 42 are then opened and the first, second and third layers 26, 28, 30 of woodchips introduced. The upper section 14 may then be replaced on top of the lower section 16 and suitably secured in position.

The influent, for example domestic, industrial or agricultural wastewater, biosolids or other waste, may then be introduced via the inlet 18 and will be distributed onto the exposed upper surface of the base layer 24 via the diffuser 22. The influent will slowly percolate downwardly through the woodchips of the base layer 24, where the solids fraction will be physically removed in the woodchip and the treated water fraction will pass through to exit at the base of the woodchips, to pass out of the outlet 20. However, while it is percolating downwardly through the woodchip, aerobic biological action including micro organism growth will take place in the woodchips of the base layer 24, reducing the pollution potential of the influent A biofilm will colonise the woodchips in the base layer 24, which biofilm will effect the biological processing of the influent. The woodchips in the base layer 24 will release carbon to modify the CNP ratio such that the carbon release will facilitate the uptake of almost all the nitrogen and some additional phosphorous in the growth of the heterotrophic biofilm cells attached to the woodchip and will reduce the N and P concentrations in the treated wastewater. This reduction of N and P in the effluent will be beneficial to ground water protection as the irrigation of land with soiled waters high in soluble N is one of the main drivers in ground water nitrate pollution. The controlled spreading of solids such as biofilm cells does not have the same penetrating and contaminating effects as the spreading of waste water.

The initial base layer 24 of woodchips are used to filter the influent in the above manner for a period of time, for example two to three weeks. The hydraulic retention time within the reactor 10 may of course be varied. During this time the biological treatment of the influent will result in gases being omitted from the base layer 24. The fan 44 may therefore be activated, whether intermittently or continually, to draw the gases upwardly through the first, second and third layers 26, 28, 30 of woodchips in the upper section 14 of the vessel 12. As mentioned above, each of the dividers 32 is perforated in order to allow this upward suction of the gases by the fan 44. The layers 26, 28, 30 of woodchip will therefore filter the gases before being exhausted from the reactor 10 by the fan 44. The layers 26, 28, 30 may support a biofilm thereon in order to effect the biological as well as physical filtration of the gases being drawn upwardly therethrough.

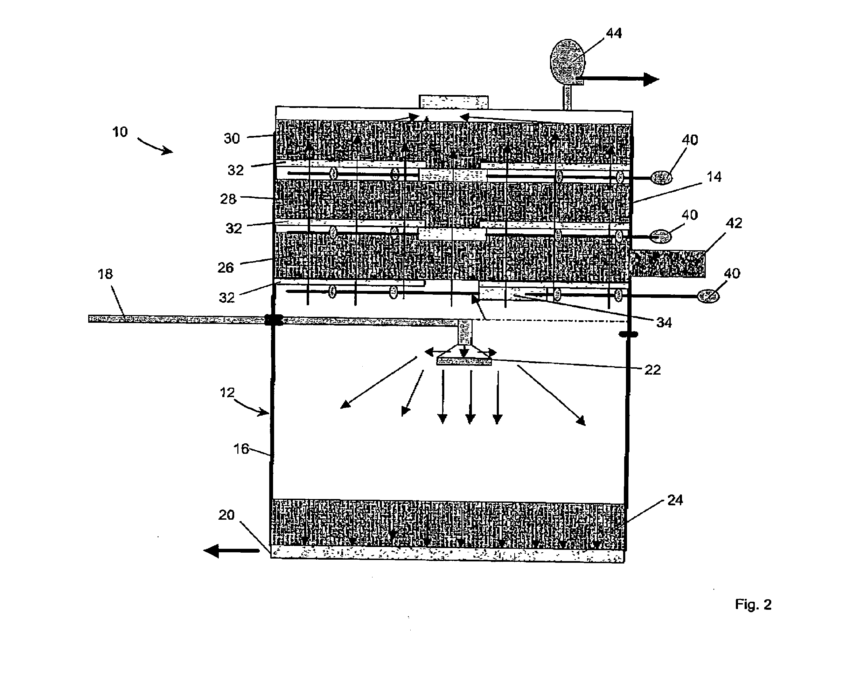

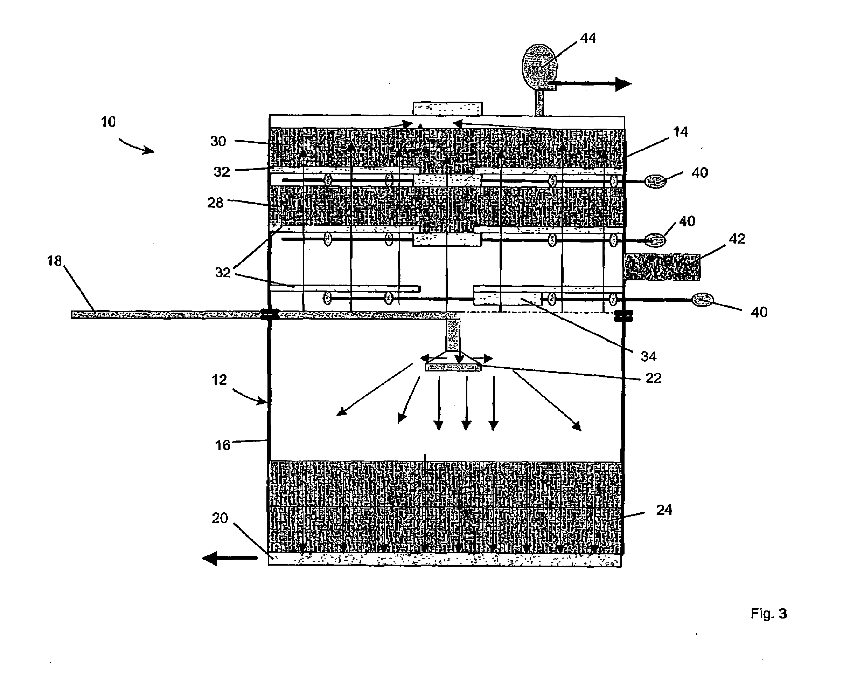

Over time the base layer 24 will approach the limit of it's filtering capacity, and before this capacity is reached the first hatch 34 is opened as illustrated in figure 2, and the first layer 26 of woodchips is thus displaced downwardly under gravity onto the base layer 24. This will thus build up the base layer 24 as illustrated in figure 3, and thus provide renewed filtering capacity. The enlarged base layer 24 can therefore continue to physically and biologically filter the influent for a further period of time.

It will be appreciated that as the initial base layer 24 reaches it's filtering capacity, the effective pressure head within the vessel 12, as experienced by the fan 44 in drawing gases upwardly through the vessel 12, will increase. Thus the reactor 10 may be provided with a sensor which will detect this change, and can be adapted to either generate a signal indicating that the first layer 24 should be manually released onto the base layer 24 in order to maintain the filtering capacity of the base layer 24, or may be arranged to automatically open the first hatch 34 in order to effect this action. The sensor may be a pressure sensor which directly measures the pressure required to draw air through the reactor 10, or could for example be a sensor adapted to measure some other parameter such as the power drawn by the fan, and upon a predetermined power draw being reached, signify that a further layer of woodchips should be released into the lower section 16.

Referring to figure 3, the enlarged base layer 24 can then continue to filter the influent for a further period of time, for example a further two to three weeks, before approaching the limit of its filtering capacity. At this stage, and as described above, the second hatch 36 is then opened to release the second layer 28 downwardly onto the base layer 24. This will further increase the filtering capacity of the base layer 24, allowing it to continue to filter influents. When the increased base layer 24 again reaches or approaches the limit of its filtering capacity, it is preferred that the third layer 30 is not released downwardly onto same, as the third layer 30 of woodchips is preferably maintained in place throughout the treatment process in order to ensure that emitted gases are always bioremediated. Thus it is preferred that the first and second layers 24, 26 are refilled via the respective door 42, and thus the above process can be repeated. This sequence of building up the base layer 24 of woodchips followed by filtering through the accumulated layers will be continued until all the tank volume, for example 2 metres in height, is used. This could for example take three to six months. Once the lower section 16 of the vessel 12 is filled with woodchips, the supply of influent is shut off, and the influent within the lower section allow to percolate down through the base layer and exit via the outlet 20. At this point the fan 44 is activated in order to effect the continued aeration of the woodchips within the vessel 12. This continued aeration will result in heat generation that will dry the woodchips and biofilm making it suitable for use as a fuel for use in a burner. Prolonged aeration of the woodchips will result in the composting thereof, and the substantial elimination of any microbial contaminants- The final compost will therefore contain valuable nutrients.

The dried woodchips can then be used as a fuel or spread on land as a compost. By utilising the woodchips in order to supply carbon during the biological processing of the waste water, almost the entire nitrogen along with substantially all of the phosphorus will be stored in heterotrophic cells of the biofilm on the woodchips and will so be available as nutrients in the ash after burning the dried woodchips, or could be directly incorporated into the soil after composting.

In order to remove the dried and/or composted woodchips, the upper section 14 is removed from the lower sections 16, and the dried/composted woodchips may therefore be removed from the lower section 16. It is however preferred that a net (not shown) is initially provided lining the walls and base of the lower section 16, which net can then simply be lifted out of the lower section 16 in order to remove all of the dried/ composted woodchips in a single action. At this point the reactor 10 can be refilled with fresh woodchips and the processing of influent can be continued.

It will be appreciated that the reactor 10, and in particular the vessel 12, may vary considerably in size, shape and overall configuration while maintaining the above described functionality. For example the upper section 14 could be modified such as to comprise a number of shallow basins (not shown) or the like, and stacked one on top of the other, with each basin being provided with a hatch or the like in a base thereof. The basins could be individually removable to allow refilling with biomaterial. A capping or other suitable cover could then be provided on the uppermost basin, on which cover the fan would then be mounted. Additionally, the basins could be supplied with influent in a step feed manner into the individual basins.

Alternatively, it is envisaged that the biomaterial, for example woodchips, could be supplied in a number of bales, for example cuboidal in shape and typically 1m x 1m x 0.4m in height, or alternatively cylindrical in shape. These bales could be assembled or stacked in a suitable array of bales within the lower section 16 in order to form the base layer 24. Care would of course need to be taken to ensure that bypass of the influent does not occur between adjacent bales of woodchip. The sidewall of the lower section 16 would again need to be airtight, with air entry only at the mesh-supported bottom of the bales of woodchip, adjacent to the outlet 20. As above, additional bales of woodchip could be placed on top of the uppermost woodchip layer once clogging of that layer was imminent. The inlet 18 and diffuser 22 would need to be replaced with an alternative influent distribution system (not shown) in order to uniformly distribute the influent wastewater on the bales of woodchip.

As mentioned above, the upper section 14 could be located remotely from the lower section 16, and utilise one or more bales of woodchip to act as a gas filter through which gases arising from the lower section 16 are passed by pumping the gas from the lower section 16 to the upper section 14 using any suitable means. The bails of woodchip within both the upper and lower sections 14, 16 can be readily moved in to and out of the respective section as required. The provision of the woodchip in bales will render the transport and loading/unloading of the woodchip a cleaner and less time consuming task.

Regardless of the configuration of the liquid filtering layers of biomaterial present in the reactor 10, whether bales or stacked layers, it is also envisaged that rather than dropping additional biomaterial onto the lower filtering layer of biomaterial when said layer is close to clogging, as an alternative the position from which the influent is discharged onto the biomaterial could be varied in order to achieve the same end result. For example multiple inlets (not shown) could replace the single inlet 18, at increasing heights in the vessel 12, with the lowest inlet initially being used to feed influent onto the lowest liquid filtering layer of biomaterial, with the remaining upper inlets being closed by any suitable means, such as a manual or remotely operable valve (not shown). At the point when the lower layer of biomaterial begins to clog, the lowest inlet would then be closed in order to shut off the flow of influent to that layer. At the same time the inlet directly above would then be opened, which inlet would be positioned to feed the influent onto the next layer of biomaterial. In this way the influent would now be dispersed onto the second layer of biomaterial, which will supplement the lower layer of biomaterial, as described in detail above. The same process can be repeated when the second layer nears it's filtering capacity, with the second inlet being closed and the inlet above it then being opening to bring the next layer of biomaterial into play. Alternatively more than one of the inlets could be opened at the same time in order to allow the influent to be simultaneously dispensed onto more than one layer, and possibly all of the layers, of the biomaterial at any given time.

## Claims

1. A bioreactor comprising a reactor vessel comprising first and second sections in communication with one another; an inlet arranged to dispense influent into the first section of the vessel; an outlet in the first section for removing filtrate; means for retaining biomaterial in the second section of the vessel; and means for drawing gas from the first section through, in use, the biomaterial retained in the second section.

2. A bioreactor according to claim 1 in which the means for retaining biomaterial in the second section is adapted to affect the staged release of the biomaterial into the first section to be used in the physical and biological filtration of the influent.

3. A bioreactor according to claim 1 or 2 in which the means for retaining biomaterial in the second section is adapted to retain the biomaterial in layers and to affect the sequential release of the layers into the first section.

4. A bioreactor according to any of claims 1 to 3 in which the gas drawing means comprises a sensor operable to monitor one or more parameters indicative of the pressure required to draw gas through the vessel.

5. A bioreactor according to claim 4 in which the retaining means in the second section is adapted to release biomaterial into the first section once an upper limit value of the sensor is reached.

6. A bioreactor according to any preceding claim in which the gas drawing means comprises a fan having an intake in fluid communication with the second section of the reactor vessel.

7. A bioreactor according to any preceding claim in which the upper section defines a headspace which is, in use, devoid of the biomaterial and with which headspace the gas drawing means is in fluid communication.

8. A bioreactor according to any preceding claim in which the bioreactor comprises means for removing the biomaterial from the reactor vessel.

9. A bioreactor according to any preceding claim in which the reactor vessel is adapted to allow the retaining means to be refilled with biomaterial.

10. A method of biologically processing influent, the method comprising the steps of:
providing a bioreactor according to the first aspect of the invention allowing the influent to percolate through a layer of biomaterial in the first section of the reactor vessel to effect the physical filtration of the influent;
biologically processing the influent by means of a biofilm on the layer of biomaterial; and
filtering gas from the first section through the biomaterial in the second section before exhausting the gas from the reactor vessel.

11. A method according to claim 10 comprising the step of dispensing at least a portion of the biomaterial from the second section onto the biomaterial in the first section in order to renew the filtration capacity of the first section.

12. A method according to claim 11 comprising, in the step of dispensing at least a portion of the biomaterial from the second section onto the biomaterial in the first section, dispensing the biomaterial once a parameter indicative of the pressure required to draw gas through the vessel reaches a predetermined limit.

13. A method according to claim 11 or 12 comprising, in the step of dispensing at least a portion of the biomaterial from the second section onto the biomaterial in the first section, dispensing the biomaterial in stages.

14. A method according to any of claims 11 to 13 comprising the step of at least partially refilling the second section with biomaterial following the dispensing of biomaterial therefrom.

15. A method according to any of claims 10 to 14 comprising the step of drawing gas through the biomaterial in the first section in order to substantially dry and/or compost the biomaterial.
